# FASCICULE DE BREVET EUROPEEN

(11) **EP 3 027 470 B1**
(45) Date de publication et mention de la délivrance du brevet: **10.01.2018**
(21) Numéro de dépôt: 14747075.1
(22) Date de dépôt: 03.07.2014
(51) Int. Cl.: B60R 13/02

(54) **PANNEAU INTÉRIEUR DÉCORATIF POUR L'HABILLAGE D'UN SUPPORT**
INNENVERKLEIDUNGSPANEEL FÜR DIE VERKLEIDUNG EINER HALTERUNG
INTERIOR DECORATIVE PANEL FOR COVERING OF A SUPPORT

(30) Priorité: 01.08.2013 FR 1357685
(43) Date de publication de la demande: 08.06.2016
(73) Titulaire: ADHEX TECHNOLOGIES, 21300 Chenôve (FR)
(72) Inventeur: AZEVEDO, Xavier, SBC Sao Paulo (BR); DE LA BROSSE, Roland, F-21000 Dijon (FR)
(74) Mandataire: Gevers SA
(86) Numéro de dépôt international: PCT/FR2014/051701
(87) Numéro de publication internationale: WO 2015/015078

(56) Documents cités:
- DE-A1- 3 522 878
- DE-A1- 10 140 873
- JP-A- S63 312 249
- JP-A- 2008 031 704
- US-A- 4 779 390

## Description

### DOMAINE TECHNIQUE

La présente invention concerne un panneau intérieur décoratif souple pour l'habillage d'un support et plus particulièrement un panneau communément appelé médaillon pour l'habillage d'une portière d'un véhicule.

### ART ANTERIEUR

Dans le domaine de l'automobile, il est bien connu des panneaux intérieurs décoratifs souples communément appelé médaillons qui sont solidarisés sur un support tel que la paroi intérieure d'une portière par exemple afin de l'habiller. Ces panneaux intérieurs décoratifs souples consistent usuellement dans une couche de mousse, telle que de la mousse Polyuréthanne (PU) comportant sur sa face supérieure une couche ornementale en tissu, en cuir ou en plastique tel qu'un film en PVC par exemple, et sur sa face inférieure une couche d'adhésif tel qu'un adhésif sensible à la pression.

La mise en place de ces panneaux s'effectue manuellement par collage par exemple desdits panneaux sur la paroi intérieure de la porte et par introduction du bord périphérique du panneau dans une gorge pratiquée dans la paroi intérieure de la porte, le bord périphérique du panneau étant scellé dans la gorge au moyen d'un adhésif, par soudure thermique ou par des moyens mécaniques.

De tels panneaux intérieurs décoratifs sont décrits dans la demande de brevet européen EP 0 569 846 et dans la demande de brevet allemand DE 10 2004 035 607 notamment. Un autre exemple correspondant au préambule de la revendication 1 et 10 est divulgué par DE 35 22 878 A1. Le document EP 0 569 846 décrit un dispositif pour la production de panneaux de garniture et un procédé pour solidariser de tels panneaux de garniture sur un support. Le panneau de garniture comporte une couche de couverture de matériau de finition lié à un matériau de support destiné à recouvrir la surface intérieure d'une portière de voiture. Le matériau de support est, par exemple, une mousse thermoplastique et/ou un non-tissé thermoplastique qui est chauffé pour le moulage. Le matériau de couverture de la couche de revêtement de finition est, par exemple, du tissu qui est refroidi pendant le pressage, pour éviter d'endommager le matériau de couverture. Ledit panneau est fabriqué dans un appareil de moulage de telle manière que le contour des bords de l'outil de moulage forme un rebord du panneau fini à travers le panneau de garnissage simultanément au moulage du panneau de garnissage. Le bord périphérique du panneau est formé par mise en forme du matériau de couverture de la couche de revêtement de finition et simultanément par densification du matériau de support. Le bord périphérique du panneau est alors fixé dans une gorge pratiquée dans un substrat, par exemple, par un adhésif, par soudage thermique, ou mécaniquement.

Le document DE 10 2004 035 607 décrit un système de fixation sécurisée pour solidariser un film sur une surface de support. Ledit film consiste dans un film protecteur, un film décoratif ou un film comportant des informations par exemple, et comporte une couche d'adhésif sur la face inférieure dudit film afin de permettre le collage du film sur un support. Ledit support comporte une gorge dans laquelle le bord périphérique du film est inséré avant que ladite gorge ne soit noyée par une matière dite de moulage telle que du silicone par exemple. La matière de moulage peut avoir une surface convexe ou concave et peut s'étendre au niveau du support ou au niveau de la face supérieure du film. Ce document décrit également un procédé pour recouvrir d'un film au moins une partie d'une surface d'une pièce d'équipement, comportant une étape de mise en forme du bord du film est mis en forme tout au long d'une gorge fraisée dans un support, une étape d'ajustement du bord du film dans la gorge et une étape de remplissage de la gorge au moyen d'un matériau de coulée.

Ces panneaux décoratifs de l'art antérieur présentent l'inconvénient de nécessiter une étape de finition lors de leur pose, tel que la pose d'un liseré au niveau de la gorge recevant le bord périphérique du panneau ce qui grève le coût de pose de ces derniers.

On connait également le document DE 35 22 878 qui décrit un procédé pour la préparation d'éléments de revêtements décoratifs pour portes de véhicules, notamment. Le panneau décoratif est constitué d'une couche de mousse dont la face supérieure est pourvue d'une couche de matériau externe collé à ladite couche de mousse. La face intérieure de la portière est revêtue d'un adhésif de stratification activable à haute fréquence, la gorge pratiquée dans ladite portière étant également revêtue d'une couche d'adhésif activable à haute fréquence. Le bord périphérique du panneau intérieur décoratif est inséré dans la gorge de la paroi intérieure de la portière en exerçant une pression, puis un champ à haute fréquence est appliqué afin d'activer la colle et assurer le collage de la couche de mousse sur la paroi intérieure de la portière du véhicule et dans la gorge.

Ce type de panneau décoratif présente l'inconvénient d'être onéreux à mettre en place sur la portière du véhicule. En effet, il nécessite une étape de dépôt d'une couche d'adhésif activable à haute fréquence sur la face intérieure de la portière et dans la gorge de cette dernière et, après insertion du bord périphérique du panneau intérieur décoratif dans la gorge de la paroi intérieure de la portière, une étape d'application d'un champ à haute fréquence pour activer la colle tout en procurant une pression du panneau intérieur décoratif sur la paroi intérieure de la portière afin d'assurer le collage dudit panneau.

### EXPOSE DE L'INVENTION

L'un des buts de l'invention est donc de remédier à ces inconvénients en proposant un panneau décoratif de conception simple et peu onéreuse permettant une pose rapide et aisée sur un support sans nécessiter d'étape de finition.

A cet effet et conformément à l'invention, il est proposé un ensemble de panneau intérieur décoratif souple et d'un support tel que la paroi intérieure d'une portière de véhicule par exemple, ledit panneau comportant au moins une couche obtenue dans une mousse ou similaire et une couche d'adhésif sur la face inférieure de la couche de support afin de permettre le collage du panneau sur le support, et ledit support comportant une gorge dans laquelle le bord périphérique du panneau est encastré ; ledit panneau est remarquable en ce qu'il comporte à sa périphérie, sur sa face inférieure, une bande non adhésive présentant une largeur sensiblement égale à la distance de débord du panneau par rapport à la paroi extérieure de la gorge de sorte que, lors de la mise en place dudit panneau, ce dernier ne colle pas sur le support à l'extérieur de la gorge, et que, après encastrement du bord périphérique du panneau dans la gorge, la couche d'adhésif adhère à la paroi intérieure de la gorge.

La gorge présente une largeur sensiblement égale à l'épaisseur du panneau intérieur et une profondeur sensiblement égale à la distance de débord du panneau par rapport à la paroi intérieure de la gorge.

Par ailleurs, le bord intérieur de la gorge est avantageusement arrondi afin de permettre une bonne adhésion de la couche d'adhésif sur la support au niveau du bord intérieur de la gorge.

Ledit bord intérieur arrondi de la gorge présente un rayon de courbure sensiblement égal à la moitié de la largeur de la gorge.

De plus, le bord extérieur de la gorge est également arrondi et ledit bord extérieur arrondi de la gorge présente un rayon de courbure sensiblement égal à la moitié de la largeur de la gorge.

Accessoirement, ledit panneau comporte une couche supérieure dite de parure solidaire de la face supérieure de la couche en mousse.

Ladite couche de parure est obtenue dans du tissu et/ou du cuir et/ou un film plastique.

Un autre objet de l'invention concerne un panneau intérieur décoratif souple pour l'habillage d'un support tel que la paroi intérieure d'une portière de véhicule par exemple, ledit panneau comportant au moins une couche obtenue dans une mousse ou similaire et une couche d'adhésif sur la face inférieure de la couche de support afin de permettre le collage du panneau sur le support, et ledit support comportant une gorge dans laquelle le bord périphérique du panneau est encastré ; ledit panneau est remarquable en ce qu'il comporte à sa périphérie, sur sa face inférieure, une bande non adhésive présentant une largeur sensiblement égale à la distance de débord du panneau par rapport à la paroi extérieure de la gorge de sorte que, lors de la mise en place dudit panneau, ce dernier ne colle pas sur le support à l'extérieur de la gorge, et que, après encastrement du bord périphérique du panneau dans la gorge, la couche d'adhésif adhère à la paroi intérieure de la gorge.

Ledit panneau comporte une couche supérieure dite de parure solidaire de la face supérieure de la couche en mousse.

De plus, ladite couche de parure est obtenue dans du tissu et/ou du cuir et/ou un film plastique.

### DESCRIPTION SOMMAIRE DES FIGURES

D'autres avantages et caractéristiques ressortiront mieux de la description qui va suivre d'une unique variante d'exécution, donnée à titre d'exemple non limitatif, du panneau intérieur décoratif souple pour l'habillage d'un support conforme à l'invention, en référence aux dessins annexés sur lesquels :
- la figure 1 est une vue en perspective d'un panneau intérieur décoratif dit médaillon de portière pour l'habillage d'une portière d'un véhicule automobile suivant l'invention,
- la figure 2 est une vue en coupe schématique du panneau intérieur décoratif suivant l'invention au droit d'un support, avant sa pose, conformément à l'invention,
- la figure 3 est une vue en coupe schématique du panneau intérieur décoratif suivant l'invention solidaire u support, après sa pose, conformément à l'invention.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas nécessairement tracées à l'échelle.

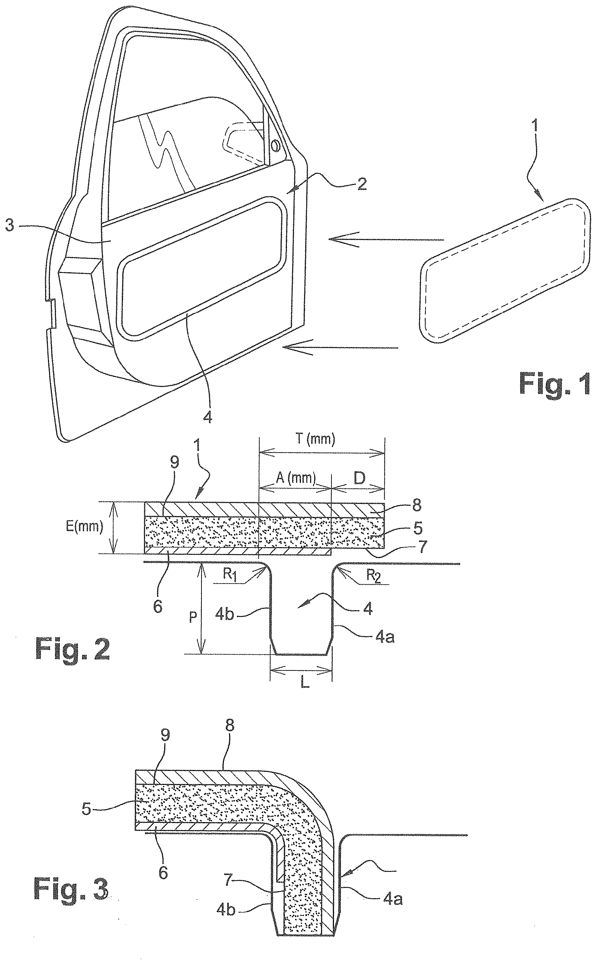

En référence à la figure 1, le panneau intérieur décoratif souple (1) suivant l'invention est destiné à habiller un support tel que la paroi intérieure d'une portière (2) de véhicule par exemple, ladite portière (2) comportant sur sa paroi intérieure (3) une gorge (4) dans laquelle le bord périphérique du panneau (1) est encastré comme il sera détaillé plus loin.

Ledit panneau (1), en référence à la figure 2, comporte une couche dite support (5) obtenue dans une mousse ou similaire et une couche d'adhésif (6) sur la face inférieure de la couche de support (5) afin de permettre le collage du panneau sur le support. On notera que la couche support (5) pourra être obtenue dans tout matériau souple bien connu de l'homme du métier et, notamment dans de la mousse de polyuréthane ou de la mousse de polyéthylène par exemple et que la couche d'adhésif pourra être obtenu dans un adhésif acrylique à base solvant auto-réticulant par exemple, ou dans tout autre adhésif bien connu de l'homme du métier sans pour autant sortir du cadre de l'invention, ledit adhésif étant déposé sur la couche support par transfert par exemple.

Accessoirement, le panneau (1) comporte un film protecteur, non représenté sur les figures, couvrant la couche d'adhésif (6) et qui est retiré avant la pose du panneau (1) sur le support (2).

Ledit panneau (1) comporte à sa périphérie, sur sa face inférieure, une bande non adhésive (7) présentant une largeur D sensiblement égale à la distance de débord du panneau (1) par rapport à la paroi extérieure (4a) de la gorge (4) de sorte que, lors de la mise en place dudit panneau (1), ce dernier ne colle pas sur le support (2) à l'extérieur de la gorge (4), et que, après encastrement du bord périphérique du panneau (1) dans la gorge (4), la couche d'adhésif (6) adhère à la paroi intérieure (4b) de la gorge (4) comme il sera détaillé plus loin.

Ladite gorge (4) présente une largeur L sensiblement égale à l'épaisseur E du panneau intérieur (1) et une profondeur P sensiblement égale à la distance de débord du panneau (1) par rapport à la paroi intérieure (4b) de la gorge (4).

Par ailleurs, le bord intérieur de la gorge (4) est avantageusement arrondi afin de permettre une bonne adhésion de la couche d'adhésif (6) sur le support au niveau du bord intérieur de la gorge (4) et éviter l'apparition d'une bulle d'air de part et d'autre du bord intérieur de la gorge (4) entre la couche support (5) et la face supérieure du support (2) d'une part et la paroi intérieure (4b) de la gorge (5) d'autre part. Ledit bord intérieur arrondi de la gorge présente un rayon de courbure R₁ sensiblement égal à la moitié de la largeur de la gorge (4).

De plus, le bord extérieur de la gorge (4) est également arrondi et ledit bord extérieur arrondi de la gorge (4) présente un rayon de courbure R₂ sensiblement égal à la moitié de la largeur de la gorge (4). Ce bord extérieur arrondi de la gorge (4) permet de faciliter le passage du bord périphérique du panneau (1) lors de l'introduction de ce dernier dans ladite gorge (4) au moyen de tout outil approprié qu'il soir manuel ou robotisé.

Accessoirement, ledit panneau (1) comporte une couche supérieure dite de parure (8) solidaire de la face supérieure de la couche support (5) en mousse. Ladite couche de parure (8) est obtenue dans du tissu et/ou du cuir et/ou un film plastique qui est, par exemple, collé sur la face supérieure de la couche support au moyen d'une couche de colle (9).

On expliquera maintenant le fonctionnement du panneau intérieur décoratif souple pour l'habillage d'un support suivant l'invention en référence aux figures 2 et 3.

Dans une première étape, le film protecteur, non représenté sur les figures, couvrant initialement la couche d'adhésif (6) est retiré, puis en référence à la figure 2, l'opérateur positionne le panneau (1) de telle sorte que la bande non adhésive (7) s'étende au-delà de la paroi extérieure (4a) de la gorge (4), c'est-à-dire que le bord périphérique de la couche d'adhésif (6) s'étende au droit de la dite gorge (4).

L'opérateur exerce alors une pression sur le panneau (1) de telle manière que la couche d'adhésif (6) colle sur la face supérieure du support (2) entre le bord intérieur de la gorge (4). On notera que, compte tenu de la bande non adhésive (7) le bord périphérique du panneau (1) n'adhère pas sur la paroi supérieure du support (2) à l'extérieure de la gorge (4). Ensuite, au moyen d'un outil adapté, l'opérateur encastre le bord périphérique du panneau (1) dans la gorge (4) de telle sorte que le bord périphérique de la couche d'adhésif (6) colle sur la paroi intérieure (4b) de la gorge (4). On observera qu'il n'est alors pas nécessaire d'opérer une étape de finition telle que la pose d'un liseré ou le dépôt d'un matériau de colmatage de la gorge (4), cette dernière étant totalement remplie par le bord replié du panneau (1).

Enfin, il est bien évident que les exemples que l'on vient de donner ne sont que des illustrations particulières en aucun cas limitatives quant aux domaines d'application de l'invention.

## Revendications

1. Ensemble de panneau intérieur décoratif (1) souple et d'un support (2) tel que la paroi intérieure d'une portière de véhicule par exemple, ledit panneau (1) comportant au moins une couche de support (5) obtenue dans une mousse ou similaire et une couche d'adhésif (6) sur la face inférieure de la couche de support (5) afin de permettre le collage du panneau (1) sur le support (2), et ledit support (2) comportant une gorge (4) dans laquelle le bord périphérique du panneau (1) est encastré, ***caractérisé* en ce que** ledit panneau (1) comporte à sa périphérie, sur sa face inférieure, une bande non adhésive (7) présentant une largeur sensiblement égale à la distance de débord du panneau (1) par rapport à la paroi extérieure (4a) de la gorge (4) de sorte que, lors de la mise en place dudit panneau (1), ce dernier ne colle pas sur le support (2) à l'extérieur de la gorge (4), et que, après encastrement du bord périphérique du panneau (1) dans la gorge (4), la couche d'adhésif (6) adhère à la paroi intérieure (4b) de la gorge (4).

2. Ensemble suivant la revendication précédente ***caractérisé* en ce que** la gorge (4) présente une largeur sensiblement égale à l'épaisseur du panneau intérieur (1).

3. Ensemble suivant l'une quelconque des revendications 1 ou 2 ***caractérisé* en ce que** la gorge (4) présente une profondeur sensiblement égale à la distance de débord du panneau (1) par rapport à la paroi intérieure (4b) de la gorge (4).

4. Ensemble suivant l'une quelconque des revendications 1 à 3 ***caractérisé* en ce que** le bord intérieur de la gorge (4) est arrondi.

5. Ensemble suivant la revendication 4 ***caractérisé* en ce que** le bord intérieur arrondi de la gorge (4) présente un rayon de courbure R₁ sensiblement égal à la moitié de la largeur de la gorge (4).

6. Ensemble suivant l'une quelconque des revendications 1 à 5 ***caractérisé* en ce que** le bord extérieur de la gorge (4) est arrondi.

7. Ensemble suivant la revendication 6 ***caractérisé* en ce que** le bord extérieur arrondi de la gorge (4) présente un rayon de courbure R₂ sensiblement égal à la moitié de la largeur de la gorge (4).

8. Ensemble suivant l'une quelconque des revendications 1 à 7 ***caractérisé* en ce qu'**il comporte une couche supérieure dite de parure (8) solidaire de la face supérieure de la couche de support (5).

9. Ensemble suivant la revendication 8 ***caractérisé* en ce que** la couche de parure (8) est obtenue dans du tissu et/ou du cuir et/ou un film plastique.

10. Panneau intérieur décoratif (1) souple pour l'habillage d'un support (2) telle que la paroi intérieure d'une portière de véhicule par exemple, ledit panneau (1) comportant au moins une couche de support (5) obtenue dans une mousse ou similaire et une couche d'adhésif (6) sur la face inférieure de la couche de support (5) afin de permettre le collage du panneau (1) sur le support (2), et ledit support (2) comportant une gorge (4) dans laquelle le bord périphérique du panneau (1) est encastré, ***caractérisé* en ce que** ledit panneau (1) comporte à sa périphérie, sur sa face inférieure, une bande non adhésive (7) présentant une largeur sensiblement égale à la distance de débord du panneau (1) par rapport à la paroi extérieure (4a) de la gorge (4) de sorte que, lors de la mise en place dudit panneau (1), ce dernier ne colle pas sur le support (2) à l'extérieur de la gorge (4), et que, après encastrement du bord périphérique du panneau (1) dans la gorge (4), la couche d'adhésif (6) adhère à la paroi intérieure (4b) de la gorge (4).

11. Panneau intérieur décoratif (1) souple suivant la revendication 10 ***caractérisé* en ce qu'**il comporte une couche supérieure dite de parure (8) solidaire de la face supérieure de la couche de support (5).

12. Panneau intérieur décoratif (1) souple suivant la revendication 11 ***caractérisé* en ce que** la couche de parure (8) est obtenue dans du tissu et/ou du cuir et/ou un film plastique.

## Patentansprüche

1. Einheit aus elastischem Innenverkleidungspaneel (1) und einem Träger (2) wie beispielsweise die Innenwand einer Fahrzeugtür, wobei das Paneel (1) mindestens eine Trägerschicht (5) aus einem Schaumstoff oder ähnlichem und eine Haftschicht (6) auf der Unterseite der Trägerschicht (5) aufweist, um das Kleben des Paneels (1) auf dem Träger (2) zu erlauben, und der Träger (2) eine Nut (4) aufweist, in welche der Umfangsrand des Paneels (1) eingerastet ist, **dadurch gekennzeichnet, dass** das Paneel (1) an seinem Umfang auf seiner Unterseite ein nicht haftendes Band (7) aufweist, das eine Breite aufweist, die etwa dem Abstand des Überstands des Paneels (1) in Bezug zur Außenwand (4a) der Nut (4) entspricht, so dass beim Platzieren des Paneels (1) dieses nicht auf dem Träger (2) außerhalb der Nut (4) klebt und dass nach Einrasten des Umfangsrandes des Paneels (1) in der Nut (4) die Haftschicht (6) an der Innenwand (4b) der Nut (4) haftet.

2. Einheit nach vorangehendem Anspruch, **dadurch gekennzeichnet, dass** die Nut (4) eine Breite aufweist, die etwa der Stärke des Innenpaneels (1) entspricht.

3. Einheit nach einem der Ansprüche 1 oder 2, **dadurch gekennzeichnet, dass** die Nut (4) eine Tiefe aufweist, die etwa dem Abstand des Überstands des Paneels (1) in Bezug zur Innenwand (4b) der Nut (4) entspricht.

4. Einheit nach einem der Ansprüche 1 bis 3, **dadurch gekennzeichnet, dass** der Innenrand der Nut (4) abgerundet ist.

5. Einheit nach Anspruch 4, **dadurch gekennzeichnet, dass** der abgerundete Innenrand der Nut (4) einen Krümmungsradius R₁ aufweist, der etwa der Hälfe der Breite der Nut (4) entspricht.

6. Einheit nach einem der Ansprüche 1 bis 5, **dadurch gekennzeichnet, dass** der Außenrand der Nut (4) abgerundet ist.

7. Einheit nach Anspruch 6, **dadurch gekennzeichnet, dass** der abgerundete Außenrand der Nut (4) einen Krümmungsradius R₂ aufeist, der etwa der Hälfte der Breite der Nut (4) entspricht.

8. Einheit nach einem der Ansprüche 1 bis 7, **dadurch gekennzeichnet, dass** sie eine obere Schmuckschicht (8) aufweist, die mit der Oberseite der Trägerschicht (5) fest verbunden ist.

9. Einheit nach Anspruch 8, **dadurch gekennzeichnet, dass** die Schmuckschicht (8) aus Stoff und/oder aus Leder und/oder aus Kunststoff hergestellt ist.

10. Elastisches Innenverkleidungspaneel (1) für die Verkleidung eines Trägers (2) wie beispielsweise die Innenwand einer Fahrzeugtür, wobei das Paneel (1) mindestens eine Trägerschicht (5) aus einem Schaumstoff oder ähnlichem und einer Haftschicht (6) auf der Unterseite der Trägerschicht (5) aufweist, um das Kleben des Paneels (1) auf dem Träger (2) zu erlauben, und der Träger (2) eine Nut (4) aufweist, in welche der Umfangsrand des Paneels (1) eingerastet ist, **dadurch gekennzeichnet, dass** das Paneel (1) an seinem Umfang auf seiner Unterseite ein nicht haftendes Band (7) aufweist, das eine Breite aufweist, die etwa dem Abstand des Überstands des Paneels (1) in Bezug zur Außenwand (4a) der Nut (4) entspricht, so dass beim Platzieren des Paneels (1) dieses nicht auf dem Träger (2) außerhalb der Nut (4) klebt und dass nach Einrasten des Umfangsrandes des Paneels (1) in der Nut (4) die Haftschicht (6) an der Innenwand (4b) der Nut (4) haftet.

11. Elastisches Innenverkleidungspaneel (1) nach Anspruch 10, **dadurch gekennzeichnet, dass** es eine obere Schmuckschicht (8) aufweist, die mit der Oberseite der Trägerschicht (5) fest verbunden ist.

12. Elastisches Innenverkleidungspaneel (1) nach Anspruch 11, **dadurch gekennzeichnet, dass** die Schmuckschicht (8) aus Stoff und/oder aus Leder und/oder aus Kunststoff hergestellt ist.

## Claims

1. An assembly of a flexible decorative inner panel (1) and a support (2) such as the inner wall of a vehicle door, for example, said panel (1) including at least one support layer (5) obtained in a foam or similar material and an adhesive layer (6) on the lower face of the support layer (5) in order to allow the gluing of the panel (1) on the support (2), and said support (2) including a groove (4) in which the peripheral edge of the panel (1) is embedded, ***characterized* in that** said panel (1) includes, at its periphery, on its lower face, a non-adhesive strip (7) having a width substantially equal to the overhang distance of the panel (1) relative to the outer wall (4a) of the groove (4) such that, when said panel (1) is placed, the latter does not adhere on the support (2) outside the groove (4), and that, after the peripheral edge of the panel (1) is embedded in the groove (4), the adhesive layer (6) adheres to the inner wall (4b) of the groove (4).

2. The assembly according to the preceding claim, ***characterized* in that** the groove (4) has a width substantially equal to the thickness of the inner panel (1).

3. The assembly according to any one of claims 1 or 2, ***characterized* in that** the groove (4) has a depth substantially equal to the overhang distance of the panel (1) relative to the inner wall (4b) of the groove (4).

4. The assembly according to any one of claims 1 to 3, ***characterized* in that** the inner edge of the groove (4) is rounded.

5. The assembly according to claim 4, ***characterized* in that** the rounded inner edge of the groove (4) has a curve radius R₁ substantially equal to half the width of the groove (4).

6. The assembly according to any one of claims 1 to 5, ***characterized* in that** the outer edge of the groove (4) is rounded.

7. The assembly according to claim 6, ***characterized* in that** the rounded outer edge of the groove (4) has a curve radius R₂ substantially equal to half the width of the groove (4).

8. The assembly according to any one of claims 1 to 7, ***characterized* in that** it includes a so-called ornamental upper layer (8) secured to the upper face of the support layer (5).

9. The assembly according to claim 8, ***characterized* in that** the ornamental layer (8) is obtained from a fabric and/or leather and/or a plastic film.

10. A flexible decorative inner panel (1) for trimming a support (2) such as the inner wall of a vehicle door, for example, said panel (1) including at least one support layer (5) obtained in a foam or similar material and an adhesive layer (6) on the lower face of the support layer (5) in order to allow the gluing of the panel (1) on the support (2), and said support (2) including a groove (4) in which the peripheral edge of the panel (1) is embedded, ***characterized* in that** said panel (1) includes, at its periphery, on its lower face, a non-adhesive strip (7) having a width substantially equal to the overhang distance of the panel (1) relative to the outer wall (4a) of the groove (4) such that, when said panel (1) is placed, the latter does not adhere on the support (2) outside the groove (4), and that, after the peripheral edge of the panel (1) is embedded in the groove (4), the adhesive layer (6) adheres to the inner wall (4b) of the groove (4).

11. The flexible decorative inner panel (1) according to claim 10, ***characterized* in that** it includes a so-called ornamental upper layer (8) secured to the upper face of the support layer (5).

12. The flexible decorative inner panel (1) according to claim 11, ***characterized* in that** the ornamental layer (8) is obtained from a fabric and/or leather and/or a plastic film.
